# EUROPÄISCHE PATENTSCHRIFT

(11) **EP 2 632 006 B1**
(45) Veröffentlichungstag und Bekanntmachung des Hinweises auf die Patenterteilung: **28.01.2015**
(21) Anmeldenummer: 13000957.4
(22) Anmeldetag: 26.02.2013
(51) Int. Cl.: H02G 11/00, E05B 65/10, E06B 7/28, H01R 35/02, E05B 47/00

(54) **Kabelübergang zwischen zwei relativ zueinander beweglichen Elementen, insbesondere zwischen einem Türflügel und einem Türrahmen sowie Panikbalken oder Panikstange mit einem solchen Kabelübergang**
Cable transfers between two elements moving relative to each other, in particular between a door leaf and a door frame, and panic beam or panic bar with such a cable transfer
Passage de câble entre deux éléments se déplaçant l'un par rapport à l'autre, notamment entre un battant de porte et un cadre de porte ainsi que serrure ou barre anti-panique avec un tel passage de câble

(30) Priorität: 27.02.2012 DE 102012003820
(43) Veröffentlichungstag der Anmeldung: 28.08.2013
(73) Patentinhaber: ASSA ABLOY Sicherheitstechnik GmbH, 72458 Albstadt (DE)
(72) Erfinder: Rotenhagen, Ulrich, 72458 Albstadt (DE)
(74) Vertreter: Heidler, Philipp

(56) Entgegenhaltungen:
- EP-A2- 1 538 721
- DE-A1- 3 105 311
- FR-A1- 2 337 446
- US-A1- 2011 296 761

## Beschreibung

Die Erfindung betrifft einen Kabelübergang zwischen zwei relativ zueinander beweglichen Elementen, insbesondere zwischen einem Türflügel und einem Türrahmen. Kabelübergänge finden überall dort Verwendung, wo eine Kabelverbindung zwischen einem Element zu einem anderen Element erforderlich ist. Besondere Anforderungen werden an solche Kabelübergänge insbesondere in solchen Bereichen gestellt, in denen die beiden durch den Kabelübergang verbundenen Elementen zueinander relativ beweglich sind. Dies kann einerseits eine erhebliche Materialbelastung für das durch den Kabelübergang geführte Kabel darstellen. Andererseits liegen solche Kabelübergänge häufig zumindest teilweise nach außen zwischen den beiden relativ zueinander beweglichen Elementen frei, so dass Kabelübergänge häufig eine Ansatzstelle bei Sabotage- und/oder Vandalismustätigkeiten sind und somit in vielen Fällen einen Sicherheitsschwachpunkt darstellen.

Besonders breite Verwendung finden solche Kabelübergänge beispielsweise bei der Verkabelung von Türblättern. Der Kabelübergang ist dabei in der Weise angeordnet, dass er wenigstens ein Kabel zwischen einem Türflügel und einem Türrahmen führt. Der Begriff Türrahmen ist dabei breit zu verstehen und umfasst nicht nur einen Türrahmen als separates Bauteil, sondern auch den an den Türflügel angrenzenden und/oder den Türflügel umrahmenden Wandbereich. In vielen Einbausituationen ist die Verkabelung eines Türblattes, beispielsweise zum Betrieb elektrischer Aktoren und/oder Sensoren, erforderlich. Die Erfindung bezieht sich somit insbesondere auf einen Kabelübergang, der zur Kabelführung zwischen einem Türflügel und einem Türrahmen vorgesehen ist.

An einen Kabelübergang zur Überleitung wenigstens eines Kabels zwischen dem feststehenden Türrahmen und dem bewegbaren Türblatt werden gleich mehrere Anforderungen gestellt. Einerseits sind die Platzverhältnisse häufig beengt, sodass der Kabelübergang idealerweise möglichst platzsparend ausgebildet ist. Gleichzeitig soll der Kabelübergang das Kabel effektiv vor Vandalismus oder Sabotage schützen. Dies gilt insbesondere für eine Aufbaumontage des Kabelkanals, bei der der Ka-belkanal von außen gut sichtbar ist. In vielen Fällen ist es zudem wünschenswert, dass der Kabelübergang ohne großen Installationsaufwand nachrüstbar ist. Insbesondere bei Kabelübergängen für Türen ist es häufig vorgesehen, diese in der Weise im Türblatt und in der Türzarge zu versenken, dass sie bei geschlossener Tür nicht mehr von außen sichtbar sind. Eine solche Anordnung eines Kabelüberganges ist beispielsweise in der deutschen Offenlegungsschrift DE 31 05 311 A1 beschrieben. Diese Art der Installation ist allerdings sehr aufwändig und teuer und kommt zur Nachrüstung quasi nicht in Frage. Zur Nachrüstung werden Kabelübergänge daher häufig von außen auf die Oberfläche des Türblatts und/oder der Türzarge aufgeschraubt, wobei dann die Kabel nahezu frei vorliegen und daher besonders anfällig für Manipulationsmaßnahmen sind. Darüber hinaus werden diese exponierten Anordnungen der Kable häufig als ästhetisch nachteilig empfunden.

Die Aufgabe der Erfindung liegt somit darin, einen Kabelübergang zwischen zwei relativ zueinander beweglichen Elementen, insbesondere zwischen einem Türflügel und einem Türrahmen, anzugeben, der besonders geeignet zur Nachrüstung beziehungsweise zur zumindest teilweisen Montage auf der Außenoberfläche eines Türblatts und/oder eines an das Türblatt angrenzenden Wandbereiches ist und der gleichzeitig eine sichere Kabelüberleitung zwischen den beiden relativ zueinander beweglichen Elementen ermöglicht und ästhetisch ansprechend ist.

Die Lösung der Aufgabe gelingt mit einem Kabelübergang, mit einer Panikstange oder einem Panikbalken und mit einer in eine Wand installierten Durchgangstür mit einem solchen Kabelübergang, einer Panikstange oder einem Panikbalken gemäß den unabhängigen Ansprüchen. Bevorzugte Weiterbildungen sind in den abhängigen Ansprüchen angegeben.

Erfindungsgemäß umfasst der Kabelübergang zwischen zwei relativ zueinander beweglichen Elementen, insbesondere zwischen einem Türflügel und einem Türrahmen, ein an dem ersten Element befestigbares Fixiergehäuse, ein an dem zweiten Element befestigbares Lagergehäuse und ein Verbindungselement mit einem Kabelkanal, der zur Führung wenigstens eines Kabels zwischen dem Lagergehäuse und dem Fixiergehäuse ausgebildet ist. Das Verbindungselement ist somit mit dem Fixiergehäuse und dem Lagergehäuse verbunden und stellt einen Verbindungskanal zwischen den beiden Gehäusen zur Verfügung, über den wenigstens ein Kabel durch einen Kabelkanal von dem einen Gehäuse zu dem anderen Gehäuse geführt werden kann. Grundsätzlich ist es möglich, dass das Verbindungselement sowohl gegenüber dem Fixiergehäuse als auch gegenüber dem Lagergehäuse zum Abstandsausgleich verschiebbar ist. Das Verbindungselement ist bevorzugt jedoch am Fixiergehäuse feststehend gelagert, insbesondere fest mit diesem verbunden. Das Verbindungselement kann mit anderen Worten in seiner Verschiebeposition bevorzugt gegenüber dem Fixiergehäuse nicht verändert werden. Eine mögliche Drehbewegung des Verbindungselementes am Fixiergehäuse um dessen Längsachse kann, muss aber nicht ausgeschlossen sein. Wenigstens am Lagergehäuse ist das Verbindungselement dagegen bewegbar, insbesondere entlang seiner Längsachse verschiebbar, gelagert. Das Verbindungselement kann somit relativ am Lagergehäuse verstellt, konkret innerhalb eines Verstellbereiches mit seinem am oder im Lagergehäuse gelagerten Endbereich in das Lagergehäuse hinein und aus dem Lagergehäuse heraus, bewegt werden. Das Verbindungselement ist nun erfindungsgemäß in der Weise ausgebildet, dass es bei einer Lageänderung des ersten Elementes (beispielsweise Türrahmen) zu dem zweiten Element (beispielsweise Türflügel) innerhalb eines Verstellbereiches zum Kabellängenausgleich zumindest teilweise zwischen dem Fixiergehäuse und dem Lagergehäuse zwischen einer Einfahrposition und einer Ausfahrposition am Lagergehäuse verschiebbar ist. Die Abstandsänderung zwischen dem ersten Element und dem zweiten Element wird mit anderen Worten durch eine Verstellung beziehungsweise Verschiebung des Verbindungselementes wenigstens am Lagergehäuse ausgeglichen, sodass die Kabelkanalverbindung zwischen dem Fixiergehäuse und dem Lagergehäuse, zumindest im Verstellbereich zwischen der Einfahrposition und der Ausfahrposition, trotz Lageänderung zueinander aufrechterhalten bleibt. Damit ragt immer gerade soviel vom Verbindungselement aus dem Lagergehäuse und dem Fixiergehäuse, wie in der jeweiligen Relativpositionierung des ersten und des zweiten Elementes zueinander zur Abstandsüberbrückung durch den Kabelkanal erforderlich ist beziehungsweise der jeweils aus dem Lagergehäuse und Fixiergehäuse herausragende Anteil des Verbindungselementes passt sich selbsttätig an die jeweilige Beabstandung des Fixiergehäuses zum Lagergehäuse an. Dies ermöglicht eine besonders platzsparende Ausbildung des Kabelübergangs, da beispielsweise die Länge des freiliegenden Verbindungselementes an den zwischen dem ersten und dem zweiten Element liegenden Abstand durch eine Verschiebung des Verbindungselementes automatisch wenigstens im Lagergehäuse ausgeglichen wird. Dadurch ist gewährleistet, dass das Verbindungselement jeweils die erforderliche Länge zur Überbrückung des Abstandes zwischen dem ersten Element und dem zweiten Element beziehungsweise zur Überleitung des wenigstens einen Kabels innerhalb des Kabelkanals aufweist. Die Einfahrposition des Verbindungselementes bezeichnet dabei diejenige Stellung, bei der das Verbindungselement maximal in wenigstens das Lagergehäuse eingeschoben ist. Die Einfahrposition kann entsprechend beispielsweise dadurch festgelegt sein, dass das erste Element an das zweite Element beziehungsweise das Fixiergehäuse an das Lagergehäuse anstößt und diese beiden Elemente oder Gehäuse somit nicht weiter aufeinander zu bewegt werden können. Die Ausfahrposition entspricht der für den Kabelübergang vorgesehenen maximalen Beabstandung des ersten Elementes und des zweiten Elementes beziehungsweise der dann vorliegenden Beabstandung des Lagergehäuses zum Fixiergehäuse voneinander. Die Ausfahrposition kann entsprechend beispielsweise dadurch festgelegt sein, dass bei einem Überschreiten der Ausfahrposition das Verbindungselement aus dem Lagergehäuse herausgezogen wird und/oder das im Kabelkanal geführte wenigstens eine Kabel über seine maximale Länge hinaus gedehnt wird. In der Regel entspricht die Ausfahrposition dem maximalen Abstand in der konkreten Einbausituation, der durch das Verbindungselement zwischen dem Fixiergehäuse und dem Lagergehäuse überbrückt wird, beziehungsweise der maximale Kabelkanallänge zwischen dem Fixiergehäuse und dem Lagergehäuse, die zur Überleitung des wenigstens einen Kabels benötigt wird.

Erfindungsgemäß ist es ferner vorgesehen, dass der Kabelübergang zur wenigstens teilweisen Montage auf einer Außenoberfläche wenigstens eines der beiden zueinander beweglichen Elemente (A, B) ausgebildet ist, insbesondere auf einem Türblatt und/oder dem an das Türblatt angrenzenden Wandbereich. Dies bedeutet, dass der Kabelübergang einerseits entsprechende Montageeinrichtungen zur Oberflächenmontage aufweist, wie beispielsweise Schraublöcher, etc., und andererseits im installierten Zustand niemals nach außen hin vollständig verborgen ist, insbesondere auch nicht bei einer geschlossenen Tür, wie es beispielsweise bei in die Türzarge eingelassenen Kabelübergängen der Fall ist. Erfindungsgemäß ist der Kabelübergang vielmehr speziell zur wenigstens teilweisen Montage auf dem Türblatt vorgesehen, insbesondere mit dem Lagergehäuse.

Die konkrete Ausbildung des Verbindungselementes kann variieren. Wesentlich für die Ausführung des Verbindungselementes ist, dass es einerseits wenigstens am Lagergehäuse verschiebbar und bevorzugt am Fixiergehäuse im wesentlichen feststehend gelagert ist und andererseits für die verschiedenen Positionierungen am Lagergehäuse und am Fixiergehäuse eine zuverlässige Kabelüberleitung zwischen den beiden Gehäusen ermöglicht. Grundsätzlich ist es daher beispielsweise auch möglich, das Verbindungselement einstückig mit dem Fixiergehäuse auszubilden, was insbesondere die Installation weiter erleichtert. Das Verbindungselement kann ferner ein starres Bauteil sein, wenn das erste und das zweite Element ihre Relativposition lediglich linear zueinander ändern, wie es beispielsweise bei einer Schiebetür bezüglich Türblatt und Türrahmen der Fall ist. Bevorzugt ist es allerdings, das Verbindungselement als ein zumindest teilweise biegsames Bauteil, insbesondere biegsames Schutzrohr, auszubilden. Biegsam ist in dem Sinne zu verstehen, dass das Verbindungselement ausgehend von einer linear erstreckten Ausgangsposition, in der der Verlauf des Kabelkanals gradlinig ist, das Verbindungselement entlang seiner Längsachse (bei einem hohlzylindrischen Schutzrohr ist dies beispielsweise die Zylinderachse) in wenigstens eine Raumrichtung reversibel verbogen werden kann, so dass die Längsachse einen in der Biegeebene gebogenen beziehungsweise gekurvten Verlauf einnimmt. Diese Ausführungsform hat den Vorteil, dass das Verbindungselement auch Schwenkbewegungen des ersten Elementes relativ zum zweiten Element insofern ausgleichen kann, dass es der Schwenkbewegung durch eine Verbiegung folgen kann. Dabei ist das Schutzrohr zumindest teilweise, insbesondere vollständig, biegsam bzw. reversibel verformbar, insbesondere verbiegbar, ausgebildet. Das Verbindungselement und insbesondere das Schutzrohr ist somit bezüglich seiner Längserstreckung beziehungsweise der Verlaufsrichtung des Kabelkanals durch das Verbindungselement zumindest teilweise flexibel. Grundsätzlich ist es dabei ausreichend, wenn das Schutzrohr lediglich in die Richtung der Relativbewegung des ersten und des zweiten Elementes biegsam ausgebildet ist, wobei eine zusätzliche Biegsamkeit des Schutzrohres in andere Raumrichtungen nicht nachteilig ist. Der Begriff Schutzrohr ist vorliegend als Oberbegriff für eine üblicherweise zumindest teilweise längserstreckte Ummantelung zu verstehen, in dessen Innerem ein Kabelkanal in Längsrichtung zur Führung des wenigstens einen Kabels angeordnet ist. Das Schutzrohr kann dabei selbst den Kabelkanal bilden oder ein zusätzliches Element im Schutzrohrinneren, beispielsweise einen Schlauch oder ähnliches, aufweisen, innerhalb dessen der Kabelkanal gebildet ist. Das Schutzrohr kann zudem als nach außen hin geschlossener, beispielsweise hohlzylinderförmiger, Körper ausgebildet sein oder alternativ zumindest teilweise Durchbrechungen oder vergleichbare Freilassungen im Außenmantel von innen nach außen hin aufweisen. Eine vollständig geschlossene Ausbildung der Außenmantelfläche des Verbindungselementes ist allerdings insofern von Vorteil, als dass im Inneren des Schutzrohrs geführte Kabel somit von außen nicht sichtbar und insbesondere nicht unmittelbar kontaktierbar sind, was beispielsweise eine Manipulation des wenigstens einen im Kabelkanal geführten Kabels erschwert.

Im praktischen Einsatz hat sich eine Vielzahl verschiedener Ausbildungen des zumindest teilweise biegsamen Schutzrohrs bewährt.

So besteht das Schutzrohr vorzugsweise aus Kunststoff. Kunststoff hat den Vorteil, dass er vergleichsweise preisgünstig in der Herstellung ist, in nahezu beliebige Form bringbar ist und häufig eine hinreichende Widerstandsfähigkeit aufweist. Zur Herstellung kann dazu beispielsweise auf einen Kunststoff aus der Gruppe der Elastomere oder Elastoplaste zurückgegriffen werden.

Das biegsame Schutzrohr kann alternativ oder ergänzend als Schraubenfeder ausgebildet sein. Dabei hat sich insbesondere die Verwendung einer Schraubenzugfeder bewährt, die im nichtzugbelasteten und gradlinig längserstreckten Zustand vorzugsweise durch aneinander anliegende Schraubenwindungen eine nahezu abgeschlossene Ummantelung für den Kabelkanal bildet. Bevorzugte Materialien für die Ausbildung der Schraubenfeder sind Metalle, insbesondere Federstähle, Kunststoffe, insbesondere mit elastischen Eigenschaften, oder kunststoffbeschichtete Metalle, insbesondere Federstähle mit geeigneter Kunststoffbeschichtung.

Das Schutzrohr kann auch ein gewendeltes Metallprofil umfassen. Die einzelnen Wendeln können dabei gleichläufig, aber insbesondere auch gegenläufig, ganz besonders auch ineinander verflochten, sein, um ein besonders widerstandsfähiges Schutzrohr zu erhalten. Die Wendeln können ferner in der Weise ausgebildet sein, dass nebeneinander liegende Metallwendeln ineinander eingreifen beziehungsweise überlappend ausgebildet sind.

Auch der Rückgriff auf eine Energieführungskette zur Ausbildung des Schutzrohrs ist möglich, insbesondere mit zumindest einseitiger Schutzabdeckung. Auch die Energieführungskette kann unmittelbar den Kabelkanal bilden oder alternativ beispielsweise ein Schlauchelement mit innen liegendem Kabelkanal umfassen.

Das Schutzrohr kann ferner wenigstens teilweise als Faltenbalg, insbesondere zur Herstellung eines flexiblen Bereichs, ausgebildet sein. Das Schutzrohr kann zudem wenigstens eine metallische Schutzabdeckung umfassen, um beispielsweise die Widerstandsfähigkeit des Schutzrohrs gegenüber Vandalismus und Sabotage zu erhöhen. Eine metallische Schutzabdeckung hat sich beispielsweise insbesondere zur Verwendung bei einem Schutzrohr mit wenigstens einem Faltenbalg bewährt. Eine derartige Armierung des Faltenbalges kann dazu beispielsweise einander überlappende und zueinander verschiebbare Metallplatten in der Art eines Gürteltierpanzers umfassen.

Wenigstens im Lagergehäuse ist bevorzugt ein Aufnahmeraum vorhanden, der zur Aufnahme des jeweils in das Lagergehäuse hineinragenden Teils des Verbindungselementes ausgebildet ist. Das Lagergehäuse ist bei dieser Ausführungsform somit in der Weise ausgebildet, dass ausreichend Platz im Inneren des Lagergehäuses vorhanden ist, um den bei Erreichen der Einfahrposition in das Lagergehäuse hineinragenden Teil des Verbindungselementes im Inneren des Lagergehäuses vollständig aufzunehmen. Dieser Aufnahmeraum kann, beispielsweise durch eine innenliegende Führungshülse, vom übrigen Innenraum des Lagergehäuses abgetrennt ausgebildet sein oder ein mit dem übrigen Innenraum des Lagergehäuses übergangslosen Aufnahmeraum darstellen. Ersteres hat den Vorteil, dass die Relativbewegung des Verbindungselementes zum Lagergehäuse beim Ein- und Ausfahren in einem separaten Raum stattfindet und damit beispielsweise räumlich getrennt von Anschlussstellen, beispielsweise für das durch den Kabelkanal geführte wenigstens eine Kabel, erfolgt.

Die Führung des wenigstens einen Kabels durch einen Kabelübergang zwischen zwei relativ zueinander beweglichen Elementen stellt, insbesondere in sicherheitsrelevanten Bereichen, regelmäßig ein Sicherheitsrisiko dar. So ist der Abstandsbereich zwischen dem ersten Element und dem zweiten Element, beispielsweise einem Türflügel und einem Türrahmen, der zwischen den beiden Elementen vom Kabelkanal bzw. vom Kabel durchlaufen wird, häufig von außen vergleichsweise leicht zugänglich und somit ein beliebter Angriffspunkt für Sabotage- und/oder Vandalismustätigkeiten. Dies gilt insbesondere dann, wenn der Kabelübergang ein sogenannter außenliegender Kabelübergang ist und er somit wenigstens teilweise auf der Außenoberfläche des Türblatts und/oder der an das Türblatt angrenzenden Türzarge in Durchgangsrichtung angeordnet ist. Bei dieser Ausführungsform bleibt der Kabelübergang somit auch im geschlossenen Zustand der Tür von außen sichtbar und ist entsprechend besonders anfällig für Manipulationen. Es hat sich daher als vorteilhaft erwiesen, wenn der Kabelübergang einen zusätzlichen Sabotageschutz umfasst, der insbesondere den Zugriff auf das in Einfahrposition befindliche Verbindungselement verhindert. Bei einer Verwendung des erfindungsgemäßen Kabelübergangs bei einem Türflügel und einem Türrahmen, insbesondere einer Schwenktür, ist das Verbindungselement üblicherweise dann in Einfahrposition, wenn die Tür geschlossen ist. Dieser beispielsweise bei Fluchttüren vorliegende Regelzustand der Tür ist für eine Sabotage besonders anfällig. Der Sabotageschutz ist daher erfindungsgemäß bevorzugt in der Weise ausgebildet, dass er den Zugriff auf das Verbindungselement zumindest dann verhindert bzw. zusätzlich erschwert, wenn dieses in Einfahrposition ist und das Fixiergehäuse und das Lagergehäuse mit anderen Worten maximal angenähert sind.

Die konkrete Ausbildung des Sabotageschutzes ist in einem breiten Spektrum variierbar. Eine besonders elegante Umsetzung dieses erfindungsgemäßen Gedankens wird vorliegend bevorzugt dadurch erreicht, dass das Fixiergehäuse und das Lagergehäuse zum Sabotageschutz zueinander formschlüssig ausgebildet sind. Das Fixiergehäuse und das Lagergehäuse können somit in der Weise zueinander positioniert werden, dass zwischen den beiden im installierten Zustand relativ zueinander beweglichen Gehäusen ein Formschluss erfolgt ist. Das Grundkonzept dieser Weiterbildung liegt somit darin, dass die bestehenden Gehäuseelemente des Fixiergehäuses und des Lagergehäuses zur Abkapselung des Verbindungselementes nach außen, beispielsweise im Schließzustand einer Tür, genutzt werden. Das Fixiergehäuse und das Lagergehäuse sind dazu bevorzugt in der Weise ausgebildet, dass sie bei in Einfahrposition befindlichem Verbindungselement formschlüssig, insbesondere unmittelbar, aneinander anliegen. Die in dieser Situation bisher häufig vorhandene Trennstelle zwischen dem Fixiergehäuse und dem Lagergehäuse, über die zumindest das Verbindungselement zu Sabotagezwecke von außen zugänglich ist, ist bei dieser Ausführungsform somit im Wesentlichen egalisiert. Der Sabotageschutz wird somit durch die zueinander formschlüssige Ausbildung des Fixiergehäuses und des Lagergehäuses erreicht. Es versteht sich von selbst, dass die relevanten Bereiche für den Formschluss des Fixiergehäuses und des Lagergehäuses insbesondere die jeweilige Seite des Fixiergehäuses und des Lagergehäuses ist, die in Einfahrposition des Verbindungselementes einander zugewandt sind und insbesondere zur Anlage kommen. Dies sind üblicherweise die beiden Seiten aus denen das Verbindungselement aus dem Fixiergehäuse und aus dem Lagergehäuse herausgeführt ist bzw. mit denen das Verbindungselement verbunden ist.

Der einfachste Formschluss gelingt über eine jeweils plane und zueinander parallele Ausbildung des Fixiergehäuses und des Lagergehäuses im Formschlussbereich. Bevorzugt sind allerdings zueinander komplementär dreidimensional verformte Anlagebereiche zwischen beiden Gehäusen. So kann das Fixiergehäuse und/oder das Lagergehäuse jeweils einen Vorsprung aufweisen, der in der Einfahrposition des Verbindungselementes in das jeweils gegenüberliegende Gehäuse zumindest teilweise hineinragt (gesehen aus einer Perspektive orthogonal zur Relativbewegung des Fixiergehäuses zum Lagergehäuse zur Einfahrposition hin). Dadurch wird im Formschlussbereich, je nach Ausmaß der dreidimensionalen Verformung, eine Art Labyrinthstruktur erhalten, die den Zugriff auf das Verbindungselement bzw. das innerhalb des Kabelkanals geführte wenigstens eine Kabel zusätzlich erschwert.

In einer weiteren bevorzugten Ausführungsform des Sabotageschutzes umfasst dieser eine Schutzeinrichtung zur zumindest teilweisen Abdeckung des Abstandsbereiches zwischen dem Lagergehäuse und dem Fixiergehäuse, wenn das Verbindungselement in der Einfahrposition ist. Die Schutzeinrichtung zeichnet sich dadurch aus, dass sie von der Außenoberfläche des Lagergehäuses und/oder des Fixiergehäuses vorsteht. Konkret kann die Schutzeinrichtung beispielsweise Formschlusselemente und insbesondere wenigstens eine vom Fixiergehäuse oder vom Lagergehäuse abstehende Schutzhülse zwischen dem Fixiergehäuse und dem Lagergehäuse aufweisen. Eine solche Ausbildung des Sabotageschutzes ist dann vorteilhaft, wenn ein unmittelbarer Formschluss zwischen dem Lagergehäuse und dem Fixiergehäuse, beispielsweise aufgrund der Installationssituation, nicht möglich ist. Die Schutzhülse ist dann in der Weise ausgebildet, dass sie die Trennstelle zwischen dem Lagergehäuse und dem Fixiergehäuse in Einfahrposition entlang des Verbindungselementes zumindest teilweise und insbesondere das Verbindungselement umlaufend nach außen hin abdeckt. Die Schutzhülse ist dabei zum Formschluss mit dem jeweils gegenüberliegenden Gehäuse ausgebildet. Selbstverständlich kann auch eine entsprechende Aufnahmeausnehmung an dem jeweils gegenüberliegenden Gehäuse vorgesehen sein, die zur Aufnahme des stirnseitigen Bereichs der Schutzhülse vorgesehen ist. Ideal ist es dabei, wenn die Schutzeinrichtung in ihrer Länge entlang des Verbindungselementes anpassbar ist, um beim Einbau des erfindungemäßen Kabelübergangs die jeweiligen Installationsgegebenheiten berücksichtigen zu können. Im einfachsten Fall kann die Schutzhülse dazu beispielsweise einen kürzbaren Überstand aufweisen. Ergänzend oder alternativ kann die Schutzhülse auch in einem begrenzten Bereich verschiebbar in einem der beiden Gehäuse gelagert sein und eine Federbeaufschlagung in Richtung des anderen Gehäuses aufweisen. Die Schutzhülse kann dann durch das gegenüberliegende Gehäuse beim Schließen der Tür zumindest teilweise eingeschoben werden und weist dazu automatisch die zur Überbrückung des Abstands des Lagergehäuses und des Fixiergehäuses erforderliche Breite auf.

Wesentlich für ein einwandfreies Funktionieren des erfindungsgemäßen Kabelübergangs ist, dass das Verbindungselement von der Ausfahrposition in die Einfahrposition zuverlässig in das Lagergehäuse hinein verschiebbar ist. In den meisten Fällen gelingt dies bereits aufgrund der zumindest teilweise vorhandenen Steifigkeit des Verbindungselementes. Die Steifigkeit kann sich beispielsweise aus der Form und/oder dem gewählten Material, insbesondere in Längsrichtung des Verbindungselementes, ergeben. Wird das Verbindungselement beispielsweise als hohlzylindrischer Körper ausgebildet, kann dieser verhältnismäßig einfach verbogen werden, weist aber in Axialrichtung seiner Zylinderachse eine verhältnismäßig hohe Steifigkeit auf. Dieser Effekt kann durch Biegestrukturen im Verbindungselement weiter verstärkt werden. So kann beispielsweise wenigstens teilweise eine Faltenbalgstruktur im Verbindungselement vorgesehen sein. Bevorzugt ist jedoch eine Rückführeinrichtung vorhanden, die in der Weise ausgebildet ist, dass sie eine Stellkraft in Richtung der Einfahrposition im Lagergehäuse auf das Verbindungselement ausübt. Konkret kann die Rückführeinrichtung dazu beispielsweise eine Zugfederbeaufschlagung im Lagergehäuse am Verbindungselement umfassen. Die Zugfeder ist dabei, beispielsweise in Verlängerung des Verbindungselementes, im Lagergehäuse angeordnet und mit diesem verbunden und wird bei einer Verstellung des Verbindungselementes im Lagergehäuse ausgehend von der Einfahrposition zu der Ausfahrposition hin auf Zug gespannt. Bei einer Rückstellbewegung, beispielsweise wenn ein aufgeschwenkter Türflügel geschlossen wird, wird ein aktives Hereinziehen des Verbindungselementes durch die gespannte Zugfederbeaufschlagung in das Lagergehäuse hinein bei einer Montage auf der Bandgegenseite bewirkt. Die Zugfederbeaufschlagung kann dabei unmittelbar zwischen dem Verbindungselement und dem Lagergehäuse bzw. einen im Inneren des Lagergehäuses und fest mit diesem verbundenen Teil angeordnet sein.

Die wesentliche Aufgabe des Kabelübergangs liegt allgemein darin, eine sichere Überleitung wenigstens eines Kabels zwischen dem ersten und dem zweiten Element zu ermöglichen. Um eine übermäßige Zugbelastung des wenigstens einen Kabels bei einem Auseinanderbewegen der beiden Elemente zu vermeiden, umfasst der erfindungsgemäße Kabelübergang vorzugsweise wenigstens eine Kabelzugsperre im Lagergehäuse und/oder wenigstens eine Kabelzugsperre im Fixiergehäuse. Die Kabelzugsperre zeichnet sich dadurch aus, dass sie den aus dem Lagergehäuse und/oder dem Fixiergehäuse vom Kabelübergang weg austretenden Teil des wenigstens einen Kabels gegenüber den durch den Kabelkanal geführten Teil des wenigstens einen Kabels entkoppelt. Damit ist gewährleistet, dass eine übermäßige Zugbelastung nicht über die Kabelzugsperre hinaus an dem Kabel lastet und dieses beispielsweise im Bereich des Türrahmens oder des Türflügels an den jeweiligen elektrischen Aktoren/Sensoren oder alternativen Verbindungsstellen herausgerissen wird. Eine Integration einer solchen Kabelzugsperre in den erfindungsgemäßen Kabelübergang ist insofern sinnvoll, als dass bei einer Installation des Kabelübergangs nicht die zusätzliche Verwendung einer Kabelzugsperre erforderlich ist.

Das Verbindungselement des erfindungsgemäßen Kabelübergangs ermöglicht somit einen Abstandsausgleich zwischen dem Fixiergehäuse und dem Lagergehäuse, wenn das erste Element und das zweite Element und damit das Fixiergehäuse zum Lagergehäuse zueinander relativ bewegt werden. Dazu ist es wichtig, dass das wenigstens eine im Kabelkanal geführte Kabel diese Längenänderung ebenfalls mit ausgleichen kann. Das im installierten Zustand des Kabelübergangs durch den Kabelkanal geführte wenigstens eine Kabel ist somit zumindest in Einfahrposition des Verbindungelementes, insbesondere im Bereich zwischen jeweils einer auf der Lagergehäuseseite und einer auf der Fixiergehäuseseite angeordneten Kabelzugsperre, zumindest teilweise gefaltet, gewendelt oder gestaucht und kann somit innerhalb eines bestimmten Bereiches bis hin zur Ausfahrposition auseinander gezogen werden.

Bevorzugt umfasst der erfindungsgemäße Kabelübergang am Verbindungselement ferner eine Verstellwegbegrenzung in Ausfahrrichtung. Die Verstellwegbegrenzung hat die Aufgabe, den maximalen Verstellweg zwischen dem Fixiergehäuse und dem Lagergehäuse festzulegen, um über den gesamten Verstellbereich hinweg eine Verbindung des Fixiergehäuses mit dem Lagergehäuse durch das Verbindungselement zu gewährleisten. Die Verstellwegbegrenzung ist entsprechend idealerweise zumindest in der Weise ausgebildet, dass sie die maximale Ausfahrposition am Lagergehäuse festlegt und somit beispielsweise ein ungewolltes Herausziehen des Verbindungselementes aus dem Lagergehäuse verhindert. Eine Verstellwegbegrenzung in Einschubrichtung wird am Leichtesten durch ein Einanderanliegen des Lagergehäuses und des Fixiergehäuses erreicht, wie es beispielsweise bei einem vorstehend beschriebenen Formschluss der Fall ist. Eine bevorzugte Umsetzung der Verstellwegbegrenzung in Ausfahrrichtung umfasst ein am Verbindungselement innerhalb des Lagergehäuses angeordnetes Anschlagelement, das beim Erreichen der maximalen Ausfahrposition an einen Innenteil des Lagergehäuses anschlägt. Durch das Anschlagelement ist gewährleistet, dass das Verbindungselement nicht aus dem Lagergehäuse herausgezogen werden kann. Das Anschlagelement ist dazu beispielsweise als ein das Verbindungselement radial zur Verschieberichtung zum Lagergehäuse vorstehender Wulst oder Ring ausgebildet.

Die Vorteile der Erfindung kommen insbesondere bei der Verwendung des erfindungsgemäßen Kabelübergangs bei einer Schwenktür und da insbesondere bei einer bandgegenseitigen Montage des Kabelübergangs zum Tragen.

Das Fixiergehäuse oder das Lagergehäuse ist in einer bevorzugten konkreten Anwendung Teil eines Panikbalkens oder einer Panikstange. Ein Panikbalken oder eine Panikstange ist ein auf einem Türblatt gelagertes horizontal erstrecktes Entriegelungselement, das insbesondere die Entriegelung von Fluchttüren in einem Alarmfall gewährleisten soll. Das Entriegelungselement ist auf dem Türblatt über jeweils ein stirnseitiges Gehäuseelement gelagert und üblicherweise auf dem Türblatt auf der Bandgegenseite angeordnet. Der Aufbau und die Funktionsweise solcher Panikbalken oder Panikstangen sind im Stand der Technik bekannt. Diese werden zur Betätigung zum Türblatt hin geschwenkt oder gedrückt und lösen dadurch die Entriegelung einer entsprechenden Türverriegelung aus. Erfindungsgemäß ist es nun vorgesehen, dass entweder das Lagergehäuse oder das Fixiergehäuse Teil des Panikbalkens oder der Panikstange ist. Dabei erfüllt insbesondere das auf dem Türblatt in Horizontalrichtung auf der zur Lagerseite und nicht zur Öffnungsseite des Türblattes hin angeordnete Gehäuseelement des Panikbalkens/der Panikstange die Doppelfunktion "Teil des Panikbalkens/der Panikstange" und "Teil des Kabelübergangs". Speziell bei einem Panikbalken kann ferner ergänzend auch der Innenraum des Betätigungselementes als Teil des Lagergehäuses zur Aufnahme eines Teils des Verbindungselementes dienen. Im praktischen Einsatz hat sich gezeigt, dass insbesondere eine Anordnung der Lagergehäuses auf dem Türblatt als Teil des Panikbalkens/der Panikstange und die Anordnung des Fixiergehäuses am oder im Türrahmen besonders geeignet ist. Diese Anordnung ermöglicht eine ästhetisch besonders ansprechende Ausbildung des Kabelübergangs, da dieser optisch übergangslos in den Panikbalken/die Panikstange integriert ist.

Ein weiterer Aspekt der Erfindung liegt in einem Panikbalken oder einer Panikstange, insbesondere gemäß DIN EN 1125, umfassend ein horizontal über ein Türblatt verlaufendes Betätigungselement und stirnseitig jeweils dazu ein Gehäuseelement, wobei erfindungsgemäß ein Kabelübergang gemäß den vorstehenden Ausführungen vorhanden ist, bei dem vorzugsweise das in Horizontalrichtung zur Lagerseite des Türblatts am Türrahmen hin angeordnete Gehäuse Teil des Lagergehäuses oder des Fixiergehäuses des Kabelübergangs ist. Zur konkreten erfindungsgemäßen Ausbildung des Kabelübergangs wird auf die vorhergehende Offenbarung Bezug genommen. Ideal ist dabei eine Anordnung des Kabelübergangs auf der Türbandgegenseite.

Ein weiterer wesentlicher Aspekt der Erfindung liegt schließlich auch in einer Durchgangsanordnung mit einer Durchgangstür mit einem Türblatt und einem Wandabschnitt, in den die Durchgangstür eingebracht ist, wobei die Durchgangstür in dem Wandabschnitt zwischen einer Schließstellung in einer Offenstellung bewegbar installiert ist, und wobei das Türblatt der Durchgangstür eine Außenoberfläche auf der Bandseite und einer dazu gegenüberliegenden Außenoberfläche auf der Bandgegenseite in Durchgangsrichtung aufweist. Diese Außenseiten sind somit die flächigen Außenseiten, die im geschlossenen Zustand der Tür quer zur Durchgangsrichtung verlaufen und deren Fläche erheblich größer ist als die Einzelflächen der Türblattränder. Erfindungsgemäß ist es nun vorgesehen, dass diese Gesamtanordnung einen Kabelübergang, eine Panikstange oder einen Panikbalken gemäß den vorstehenden Ausführungen aufweist, auf die hiermit Bezug genommen wird. Wesentlich ist dabei die Montage der Kabelübergangs, der Panikstange oder des Panikbalkens wenigstens teilweise auf einer der Außenseiten des Türblatts auf der Bandseite oder auf der Bandgegenseite und/oder auf der Oberfläche des an das Türblatt angrenzenden Wandabschnitts, insbesondere auf einer Außenoberfläche in der Ebene des Montageaußenseite des Türblatts oder zumindest einer Ebene parallel dazu. Die Vorteile der Erfindung treten dabei ganz besonders deutlich dann hervor, wenn der erfindungsgemäße Kabelübergang, Panikstange oder Panikbalken vollständig auf einer Außenseite der Durchgangsanordnung angeordnet ist.

Die Erfindung wird nachstehend anhand der in den Figuren dargestellten Ausführungsbeispiele näher schematisch erläutert. Es zeigen:
- Fig. 1a: eine Seitenansicht von der Bandgegenseite auf die Fläche eines Türblatts in einem Türrahmen mit einem erfindungsgemäßen Kabelübergang;
- Fig. 1b: den Kabelübergang in Horizontalschnittansicht aus Fig. 1a entlang der Linie I-I in Einfahrposition;
- Fig. 1c: den Kabelübergang aus Fig. 1b in Ausfahrposition;
- Fig. 1d: eine alternative Ausführungsform des Kabelübergangs in Einfahrposition;
- Fig. 1e: den Kabelübergang aus Fig. 1d in Ausfahrposition;
- Fig. 2a bis 2c: eine Horizontalschnittansicht durch eine weitere Ausführungsform eines Kabelübergangs bei geschlossener Tür (Fig. 2a), leicht geöffneter Tür (Fig. 2b) und maximal aufgeschwenkter Tür (Fig. 2c);
- Fig. 3a und 3b: weitere Montagealternativen eines Kabelübergangs in einer Horizontalschnittansicht; und
- Fig. 4a und 4b: Horizontalschnittansichten durch weitere Ausführungsformen eines Kabelübergangs mit Spannvorrichtung für das Kabel.

Gleiche Bauteile sind in den Figuren mit gleichen Bezugszeichen bezeichnet. Sich wiederholende Bauteile oder Bezugszeichen sind nicht immer in jeder Figur separat bezeichnet.

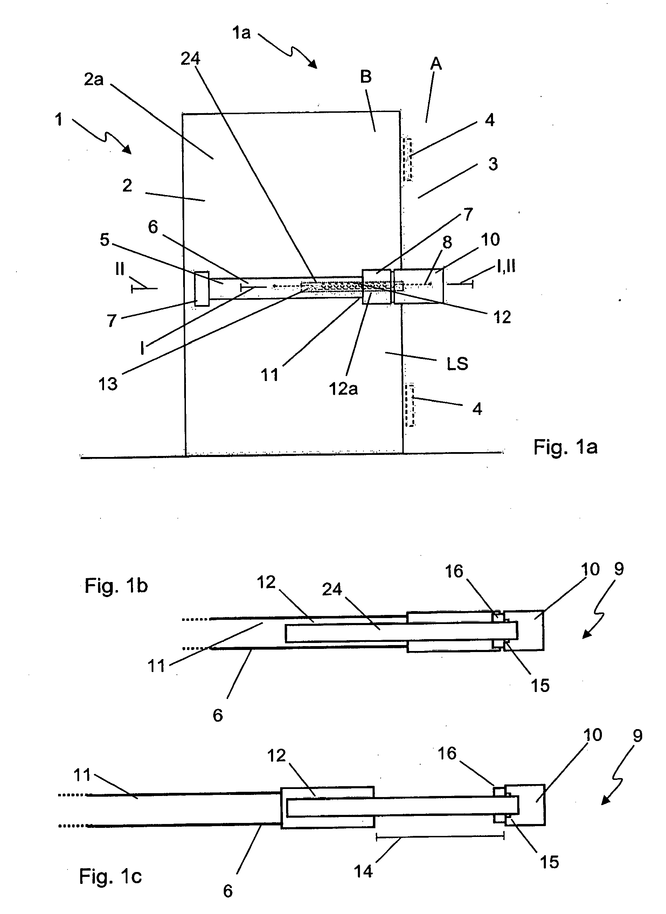

Fig. 1a zeigt eine Fluchttüranordnung 1 mit einem ersten Element A, konkret einem Türflügel 2, und einem zweiten Element B, konkret einem von der Wand, in die der Türflügel 2 eingelassen ist, gebildeten Türrahmen 3. Der Türflügel 2 ist über die Türbänder 4 (auf der Rückseite des Türflügels 2 angeordnet) schwenkbar gelagert und im vorliegenden Ausführungsbeispiel in die Bildebene hinein aufschwenkbar. Der Türflügel 2 ist gegenüber dem Türrahmen 3 somit relativ bewegbar (in einer Horizontalebene schwenkbar). Auf dem Türflügel 2 ist auf dessen bandgegenseitiger Außenfläche 2a ein Panikbalken 5 angeordnet, bei dessen Betätigung eine Öffnung des Türflügels 2 in Aufschwenkrichtung ausgelöst wird. Die Öffnung in der Wand kann dann in Durchgangsrichtung a durchschritten werden. Der Panikbalken 5 umfasst dazu ein horizontales Betätigungselement 6 und in Horizontalrichtung jeweils stirnseitig eines der Gehäuseelemente 7. Die Gehäuseelemente 7 dienen einerseits zur Befestigung und Halterung des Betätigungselementes 6 auf dem Türblatt 2 und können darüber hinaus Auslösemittel zur Betätigung einer nicht weiter bezeichneten Entriegelungsmechanik aufweisen.

Zwischen dem Türflügel 2 und dem Türrahmen 3 ist auf der Bandgegenseite ein Kabel 8 geführt. Über das Kabel 8 wird beispielsweise elektrische Energie von der Türrahmenseite auf die Türflügelseite weitergeleitet. Das Kabel 8 ist dazu in einem Kabelübergang 9 geführt, dessen Aufbau und Funktionsweise nachstehend weiter erläutert wird. Der Kabelübergang 9 ist vollständig auf einer gemeinsamen Außenseite (konkret der auf der Bandgegenseite befindlichen Außenseite) einer Durchgangstüranordnung 1a angeordnet, die neben dem Türflügel 2 und den an den Türflügel angrenzenden Wandbereichen insbesondere auch den Kabelübergang 9 umfasst.

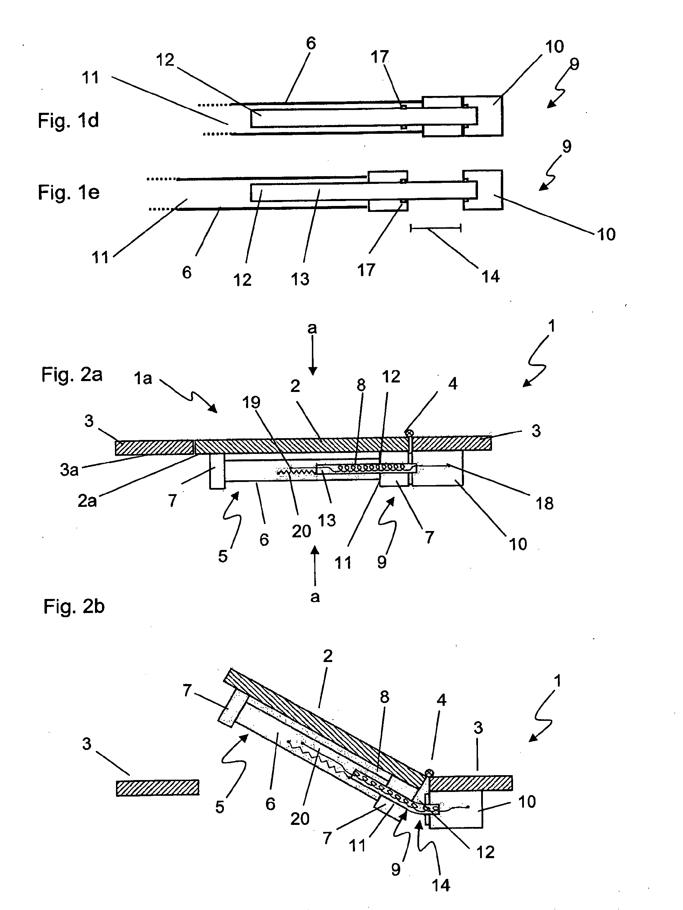

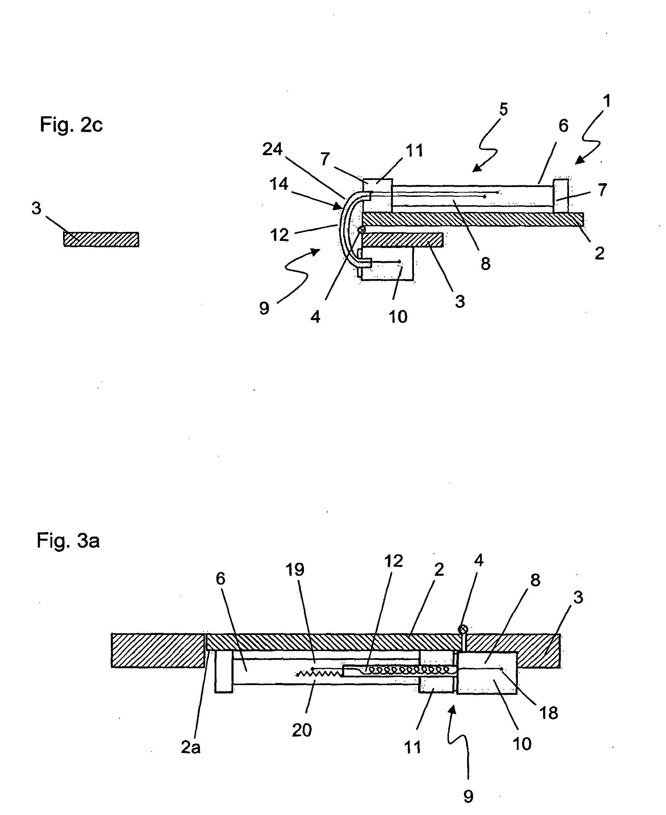

Die wesentlichen Elemente des Kabelübergangs 9 sind ein auf der Außenoberfläche 3a (konkret der bandgegenseitigen Außenoberfläche, wobei grundsätzlich auch eine Montage auf der bandseitigen Außenoberfläche in Frage kommt) am Türrahmen 3 (bzw. der Wand) befestigtes Fixiergehäuse 10, ein auf der Außenoberfläche 2a des Türflügels befestigtes Lagergehäuse 11 und ein Verbindungselement 12, das einen Kabelkanal 13 zur Führung des Kabels 8 von der Türrahmenseite zur Türflügelseite aufweist. Der gesamte Kabelübergang 9 ist somit auf einer Außenseite der Durchgangstüranordnung 1a angeordnet. Das Lagergehäuse 11 des Kabelübergangs 9 umfasst konkret Teile eines der Gehäuseelemente 7 sowie des Betätigungselementes 6 des Panikbalkens 5. Insofern erfüllen diese Bauteile in der nachstehend noch näher erläuterten Weise Doppelfunktionen. Bei den Verbindungselementen 12 handelt es sich beim vorliegenden Ausführungsbeispiel um ein hohlzylindrisches Schutzrohr 24, welches einen runden Querschnitt aufweist, zu beiden Stirnseiten hin offen ausgebildet ist und an diesen Stirnseiten den Eingang bzw. Ausgang des Kabelkanals 13 aufweist. Das Schutzrohr 24 beziehungsweise das Verbindungselement 12 ist ferner biegsam ausgebildet, was aus Übersichtlichkeitsgründen in den Figuren 1b bis 1d nicht berücksichtigt ist. Durch das Verbindungselement 12 wird somit ein Verbindungskanal zwischen dem Innenraum des Fixiergehäuses 10 und dem Innenraum des Lagergehäuses 11 (Gesamtheit aus Gehäuseelement 7 und Betätigungselement 6) erhalten. Das Kabel 8 durchläuft den Kabelkanal 13 von der Türrahmenseite zur Türflügelseite und steht dort jeweils in bestimmter Länge über die Stirnseitenöffnungen des Verbindungselementes 12 in dem jeweiligen Innenraum vor. Die Herausforderung für die Führung des Kabels 8 liegt nun darin, dass sich der Abstand zwischen dem Fixiergehäuse 10 und dem Lagergehäuse 11 beim Aufschwenken des Türflügels 2 im Türrahmen 3 ändert (beispielsweise ersichtlich aus den Figuren 2a, 2b und 2c). Der relevante Abstand ist hier der Abstand der beiden jeweiligen Austrittsöffnungen des Verbindungselements 12 aus dem Fixiergehäuse 10 und dem Lagergehäuse 11. Die Relativbewegung des Türflügels 2 zum Türrahmen 3 beim Öffnen des Türflügels hat zur Folge, dass sich der Abstand zwischen dem Fixiergehäuse 10 und dem Lagergehäuse 11 vergrößert und entsprechend ein längerer Kabelanteil zur Führung des Kabels 8 vom Türrahmen 3 zum Türflügel 2 hin erforderlich ist. Das Kabel 8 ist dazu in der vorliegenden Ausführungsform gewendelt ausgebildet und wird somit beim Öffnen des Türflügels 2 zum Kabellängenausgleich wenigstens teilweise gespannt. In dieser Situation ist es mit dem erfindungsgemäßen Kabelübergang 9 nun möglich, die durch das als Schutzrohr ausgebildete Verbindungselement 12 erhaltene Schutzummantelung des Kabels 8 beziehungsweise des Kabelkanals 13 in den verschiedenen Schwenkstellungen des Türflügels 2 relativ zum Türrahmen 3 aufrechtzuerhalten.

Ein wesentlicher Aspekt der Erfindung liegt nun in der speziellen Lagerung des Verbindungselementes 12 am Fixiergehäuse 10 und am Lagergehäuse 11. Beim vorliegenden Ausführungsbeispiel ist das Verbindungselement 12 fest am Fixiergehäuse 10 gelagert ist. Das Verbindungselement 12 ist dazu insbesondere nicht gegenüber dem Fixiergehäuse 10 verschiebbar, ganz besonders nicht herausziehbar und/oder hineinschiebbar. Das Verbindungselement 12 ragt ferner in das Lagergehäuse 11 mit einem Überstandsbereich 12a hinein und ist im Unterschied zur Lagerung am Fixiergehäuse 10 gegenüber diesem verschiebbar. Die Länge des Bereichs 12a kann somit ausgehend von der Situation in Fig. 1a verkleinert werden. Die Verschiebbarkeit erstreckt sich dabei zumindest zwischen einer maximalen Einfahrposition (unter anderem gemäß der Figuren 1a und 2a; geschlossene Tür) und einer maximalen Ausfahrposition (unter anderem gemäß Fig. 2c; maximal aufgeschwenkte Tür). Ausgehend von der Schließstellung des Türflügels 2 in Fig. 1 a wird beim Aufschwenken des Türflügels 2 somit der vom Kabelübergang 9 zu überbrückende Bereich vergrößert, da das Lagergehäuse 11 vom Fixiergehäuse 10 entfernt wird. Die dabei auftretende Trennstelle 14 zwischen diesen beiden Gehäusen wird vom Verbindungselement 12 überbrückt. Das Verbindungselement 12 wird dazu teilweise aus dem Lagergehäuse 11 herausgezogen. Beim Schließen des Türflügels 2 wird dieser Vorgang entsprechend umgekehrt und die Abstandsverkleinerung zwischen dem Lagergehäuse 11 und dem Fixiergehäuse 10 durch ein Hineinschieben des Verbindungselementes 12 in das Lagergehäuse 11 ausgeglichen. Insgesamt bleibt somit bei den verschiedenen Schwenkstellungen des Türflügels 2 gegenüber dem Türrahmen das im Kabelübergang 9 geführte Kabel 8 stets nach außen hin abgeschirmt, sei es durch das Verbindungselement 12 oder unmittelbar durch das Fixiergehäuse 10 oder das Lagergehäuse 11, unabhängig von der Schwenkstellung des Türflügels 2 gegenüber dem Türrahmen 3.

Die Figuren 1b und 1c verdeutlichen das Fig. 1 a zugrunde liegende Funktionsprinzip, wobei in den Figuren 1b und1c Einzelheiten zur konkreten Ausbildung des Panikbalkens 5 nicht berücksichtigt sind. Die Figuren 1b und 1c sind dabei Schnittansichten durch den Kabelübergang 9 in einer Vertikalebene entlang der Linie I-I aus Fig. 1. Die Figuren 1b und 1c verdeutlichen die Funktionsweise des Kabelübergangs 9, wenn der Relativabstand des Fixiergehäuses 10 zum Lagergehäuse 11, beispielsweise durch Aufschwenken eines Türflügels an einem Türrahmen, verändert wird. Fig. 1b betrifft dabei die Einfahrposition, wenn das Verbindungselement 12 maximal in den Innenraum des Lagergehäuses eingeschoben ist. Werden nun das Fixiergehäuse 10 und das Lagergehäuse 11 auseinandergezogen, ergibt sich ein Abstandsbereich zwischen diesen beiden Elementen, der vorliegend mit der Trennstelle 14 angegeben ist. Das Verbindungselement 12 ist fest mit dem Fixiergehäuse 10 verbunden. Dazu ist im vorliegenden Beispiel ein Befestigungselement 15 vorhanden, das das Verbindungselement am Fixiergehäuse fixiert. Bei einer Abstandsänderung des Lagergehäuses 11 zum Fixiergehäuse 10 wird das Verbindungselement 12 somit vom Fixiergehäuse 10 festgehalten. In das Lagergehäuse 11 ragt das Verbindungselement 12 allerdings mit seinem dem Fixiergehäuse 10 gegenüberliegenden Endbereich 12a hinein. Die Länge dieses Endbereichs ist aufgrund der verschiebbaren Lagerung des Verbindungselementes 12 am Lagergehäuse 11 variabel. Wird das Lagergehäuse 11 somit vom Fixiergehäuse 10 wegbewegt und die Trennstelle 14 damit vergrößert, zieht das Fixiergehäuse 10 das Verbindungselement 12 zum Ausgleich der Trennstelle 14 aus dem Lagergehäuse 11 heraus. Dieser Vorgang ist reversibel, sodass das Verbindungselement 12 entsprechend vom Fixiergehäuse 10 in das Lagergehäuse 11 hineingeschoben wird, wenn beide Teile relativ zueinander angenähert werden, wie beispielsweise beim Schließend einer Tür.

Ein weiterer wesentlicher Aspekt der Erfindung liegt in der in den Figuren 1b und 1c angegebenen Schutzhülse 16. Die Schutzhülse 16 ist ein Sabotageschutzelement und erschwert die Manipulation des im Inneren des Kabelübergangs 9 geführten Kabels 8, wenn der Kabelübergang in Einfahrposition (Fig. 1 b) ist. Bei der Schutzhülse 16 handelt es sich um ein Hülsenelement, das auf der dem Lagergehäuse zugewandten Außenseite des Fixiergehäuses 10 angebracht ist und das Verbindungselement 12 in Axialrichtung (Längsrichtung des Verbindungselementes 12) umlaufend umgibt. In der Einfahrposition gemäß Fig. 1b ragt die Schutzhülse 16 mit ihrer dem Lagergehäuse 11 zugewandten Stirnseite formschlüssig in eine nicht näher angegebene Aufnahmeausnehmung im Lagergehäuse 11. Mit Hilfe der Schutzhülse 16 des Kabelübergangs 9 erfolgt bei geschlossener Tür somit ein Formschluss zwischen dem Fixiergehäuse 10 und Lagergehäuse 11, sodass ein Zugriff auf das im Inneren des Kabelübergangs 9 geführte Kabel 8, beispielsweise aus Vandalismus und/oder Sabotagegründen, erheblich erschwert ist. Die Schutzhülse ist in ihrer axialen Länge daher so bemessen, dass sie wenigstens den Abstand des Fixiergehäuses 10 zum Lagergehäuse 11 bei geschlossener Tür überbrückt.

Die Figuren 1d und 1e betreffen eine alternative Ausführung des Kabelübergangs 9, wobei die in den Figuren dargestellten alternativen Ausführungsformen des Kabelübergangs 9 jeweils mit den gleichen Bezugszeichen angegeben sind. Die wesentlichen Unterschiede des Kabelübergangs 9 gemäß der Figuren 1d und 1e zum vorhergehenden Ausführungsbeispiel liegen einerseits in einer Verstellwegbegrenzung und in einer alternativen Ausbildung des Sabotageschutzes.

Zur Verstellwegbegrenzung ist am Verbindungselement 12 ein dieses radial umlaufendes Anschlagelement 17, welches in Radialrichtung über die Außenoberfläche des Verbindungselementes 12 vorsteht, angeordnet. Dieses Anschlagelement 17 ist fest mit dem Verbindungselement 19 verbunden. Wird das Lagergehäuse 11 nun ausgehend von Fig. 1d vom Fixiergehäuse 10 aus der Einfahrposition heraus wegbewegt, ist die Ausfahrposition (maximale Beabstandung) durch das Anschlagelement 17 festgelegt. Dieses wird durch die Herausziehbewegung des Verbindungselementes 12 aus dem Lagergehäuse 11 zur Innenwand des Lagergehäuses 11 bewegt und schlägt schließlich in der Ausfahrposition gegen dieses von innen an. Die Ausnehmung für das Verbindungselement 12 in der Wand des Lagergehäuses 11 ist somit kleiner als die Abmessungen des Anschlagelementes 17 ausgebildet. Eine weitergehende Auseinanderbewegung des Lagergehäuses 11 und des Fixiergehäuses 10 wird somit durch das Anschlagelement 17 verhindert.

Auch der Kabelübergang 9 in der Ausführung gemäß der Figuren 1d und 1e ist sabotagegeschützt ausgebildet. Im Unterschied zu dem vorhergehenden Ausführungsbeispiel gemäß den Figuren 1b und 1c ist in den Figuren 1d und 1e eine unmittelbar zueinander formschlüssige Ausbildung des Fixiergehäuses 10 und des Lagergehäuses 11 vorgesehen. Die in der Einfahrposition des Kabelübergangs 9 einander zugewandten Gehäuseseiten des Fixiergehäuses 10 und Lagergehäuses 11 sind somit in der Weise ausgebildet, dass sie formschlüssig aneinander anliegen können, wie es in der Einfahrposition der Fall ist. Konkret sind beim Kabelübergang 9 gemäß der Figuren 1d und 1e die einander zugewandten Seiten des Lagergehäuses 11 und des Fixiergehäuses 10 als plane und zueinander komplementäre Flächen ausgebildet. Es versteht sich von selbst, dass hier zahlreiche Varianten zum Erhalt eines Formschlusses der beiden Gehäuse möglich sind.

Die Figuren 2a, 2b und 2c veranschaulichen die Funktionsweise des Kabelübergangs 9 in der in Fig. 1a gezeigten Ausführungsform weiter. Die Figuren 2a, 2b und 2c sind dabei Horizontalschnittsichten entlang der Linie II-II aus Fig. 1 a. Fig. 2a zeigt den geschlossenen Zustand der Tür (Kabelübergang 9 in Einfahrposition), Fig. 2b einen Öffnungswinkel des Türflügels 2 von ungefähr 30° und Fig. 2c den Maximalöffnungszustand des Türflügels 2 (Ausfahrposition des Kabelübergangs 9).

In Fig. 2a ist der Türflügel 2 der Fluchttür geschlossen und wird durch eine nicht näher dargestellte Verriegelungseinrichtung in der Schließstellung gehalten. Durch ein Betätigung des Panikbalkens 5 ist diese Verriegelungseinrichtung entriegelbar, sodass durch eine Bewegung des Panikbalkens 5, beispielsweise durch Drücken, zum Türflügel 2 hin die Tür zur Türbandseite hin geöffnet werden kann, wie in den Figuren 2b und 2c gezeigt. In der Ausgangsposition gemäß Fig. 2a ist der Kabelübergang 9 in Einfahrposition und das Fixiergehäuse 10 liegt mit einem nicht näher bezeichneten Vorsprungsbereich, der Teil des Fixiergehäuses ist, formschlüssig am Lagergehäuse 11 an. Das Kabel 8 wird von einer Befestigungsstelle 18, an der es fest mit dem Fixiergehäuse 10 verbunden ist, hin zu einer Befestigungsstelle 19 im Lagergehäuse 11, an dem es fest mit dem Lagergehäuse 11 verbunden ist, vom Türflügel 2 zum Türrahmen 3 geführt. Dazu ist das Kabel 8 durch das hohlzylindrische und als Schutzrohr ausgebildete Verbindungselement 12 vom Fixiergehäuse 10 zum Lagergehäuse 11 geführt und mittig zumindest teilweise schraubenförmig gewickelt ausgebildet. Die schraubenförmige Wicklung des Kabels 8 ermöglicht einen Längenausgleich des Kabels 8, wenn die beiden Befestigungselemente 18 und 19, beispielsweise bei einer Öffnungsbewegung der Tür, wie in den Figuren 2b und 2c näher veranschaulicht, auseinander bewegt werden. Bei einer Öffnung der Tür schwenkt das Türblatt um eine vertikal durch die Türbänder verlaufende Schwenkachse zur Türbandseite hin auf, sodass das Fixiergehäuse 10 und das Lagergehäuse 11, insbesondere mit ihren einander zugewandten Gehäuseseiten, auseinander bewegt werden. Dadurch wird das als Schutzrohr ausgebildete und fest mit dem Fixiergehäuse 10 verbundene Verbindungselement 12 aus dem Lagergehäuse 11 herausgezogen und umgibt das Kabel 8 nach außen hin über die Trennstelle 14 hinweg. Das Kabel 8 ist mit zunehmender Öffnung des Türflügels 2 somit zunehmend auf Zug beansprucht. Um diese Zugbelastung nicht an Anschlusselemente und/oder Verbraucherelemente zu übertragen, ist das Kabel 8 jeweils auf Seiten des Türflügels 2 und auf Seiten des Türrahmens 3 durch eines der Befestigungselemente 18 und 19 befestigt, die entsprechend als Zugentlastungsmittel für außerhalb der Befestigungselemente 18 und 19 liegende Kabelteile wirken.

Die Figuren 2b und 2c verdeutlichen ferner, dass das Verbindungselement 12 in der vorliegenden Ausführungsform biegsam ausgebildet ist und entsprechend der Schwenkbewegung des auf dem Türflügel 2 angeordneten Lagergehäuses 11 relativ zu dem am feststehenden Türrahmen 3 angeordneten Fixiergehäuse 10 folgen kann. Mit zunehmender Öffnung des Türflügels 2 nimmt auch die Verbiegung des Verbindungselementes 12, ausgehend von der linearen Positionierung in Fig. 2a, zu.

Der in der Reihenfolge der Figuren 2a, 2b und 2c angegebene Öffnungsvorgang läuft umgekehrt bei einem Schließvorgang der Tür gemäß den Figuren 2c, 2b und 2a ab. Wird der aufgeschwenkte Türflügel 2 zum Türrahmen 3 hin geschlossen, verkleinert sich der Abstand des Lagergehäuses 11 zum Fixiergehäuse 10. Das Verbindungselement 12 wird dabei in einen nicht näher bezeichneten Aufnahmeraum innerhalb des Lagergehäuses 11 hineingeschoben. Um die Einschubbewegung des Verbindungselementes 12 in das Lagergehäuse 11 zu erleichtern, ist das Verbindungselement 12 auf der Seite des Lagergehäuses 11 zugfederbeaufschlagt. Dazu ist eine mit dem Lagergehäuse 11 und dem in das Lagergehäuse 11 hineinragenden Kopfbereich 12a des Verbindungselementes 12 verbundene Zugfeder 20 vorgesehen. Diese wird mit steigendem Öffnungswinkel des Türflügels 2 gegenüber dem Türrahmen 3 zunehmend gespannt und übt somit eine Rückstellkraft bzw. Einziehkraft auf das Verbindungselement 12 aus. Die Zugfeder 20 kann zudem in der Weise gewählt sein, dass sie gleichzeitig als elastische Verstellwegbegrenzung fungiert und die maximale Ausziehlänge des Verbindungselementes aus dem Lagergehäuse 11 festlegt.

Bei der in den Figuren 2a, 2b und 2c gezeigten Ausführungsform ist der Kabelübergang sowohl auf der Oberfläche des Türblattes 2 als auch des Türrahmens 3 bzw. der den Türrahmen 3 bildenden Wandung aufmontiert. Eine solche Montage ist dann möglich, wenn der Türrahmen bzw. die an die Tür angrenzende Wand und der Türflügel flächenbündig ausgebildet sind.

Fig. 3a zeigt die Installation in eine Leichtbauwand, wobei das Fixiergehäuse teilweise in den Türrahmen 3 bzw. den entsprechenden Wandbereich eingelassen ist. Bei dieser Ausführungsform steht das Fixiergehäuse 12 ferner in die Ebene des Türflügels 2 vor und überlappt den Türflügel 2 teilweise.

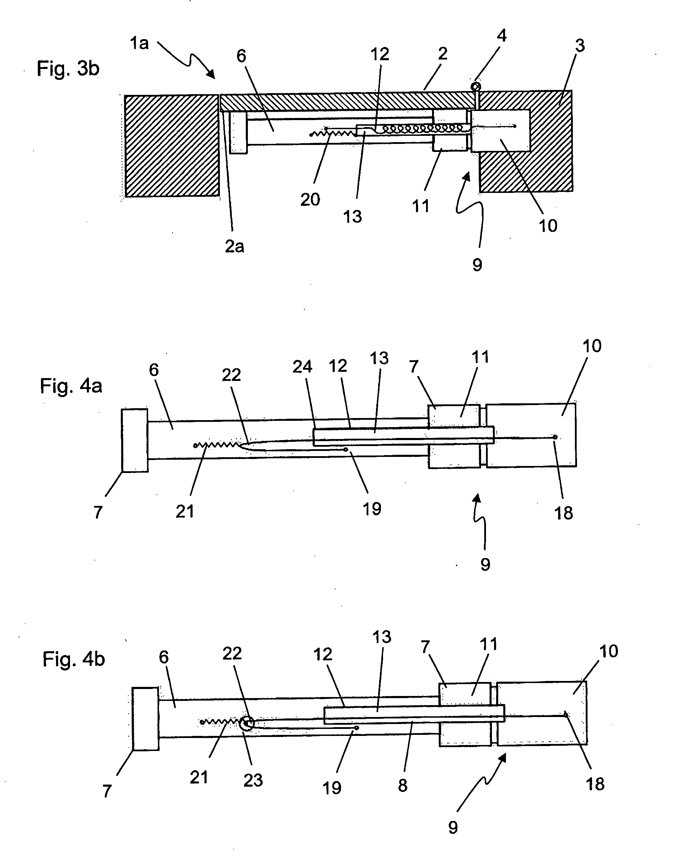

Fig. 3b schließlich offenbart eine weitere Wandanschlussalternative, konkret die Integration in eine Türleibung. Das Fixiergehäuse 10 ist dabei entweder, wie in Fig. 3b gezeigt, in den Türrahmen 3 bzw. das entsprechende Wandelement eingelassen. Alternativ ist es auch möglich, das Fixiergehäuse 10 sehr flach auszubilden und auf der dem Türflügel 10 zugewandten Fläche der Türleibung aufzumontieren. Auch bei dieser Ausführungsform steht das Fixiergehäuse 10 zum Türflügel 2 hin über den Türrahmen 3 vor und überlappt den Türflügel 2 teilweise.

In den vorstehenden Ausführungsbeispielen des Kabelübergangs 9 erfolgte eine Nachführung des Kabels 8 durch die schraubenförmige Wendelung zum Kabellängenausgleich. Die Figuren 4a und 4b betreffen nun alternative Möglichkeiten zur Kabelnachführung. In Fig. 4a ist dazu beispielsweise eine Zugfeder 21 zwischen dem Lagergehäuse 11 und dem in das Lagergehäuse 11 hineinragenden Teil des Kabels 8 angeordnet. Idealerweise ist die Zugfeder 21 dabei entweder unmittelbar mit dem Ende des Kabels 8 verbunden oder, wie in Fig. 4a angegeben, mit einem Scheitelpunkt 22 in Einfahrposition des Kabelübergangs 9 einer Kabelschlaufe. Beim Auseinanderziehen des Lagergehäuses 11 und des Fixiergehäuses 10 wird der Anknüpfungspunkt der Zugfeder 21 am Kabel 8 zum Fixiergehäuse 10 bewegt und die Zugfeder 21 gespannt. Die dadurch entstehenden Zugkräfte ziehen das Kabel 8 bei einer Zusammenführung des Fixiergehäuses 10 und des Lagergehäuses 11 in das Innere des Lagergehäuses 11 hinein, sodass das Kabel 8 beispielsweise in einem gespannten Zustand ist.

Fig. 4b betrifft eine bezüglich der Kabelnachführung alternativ zu Fig. 4a ausgebildete Variante, bei der die Zugfeder 21 nicht unmittelbar am Kabel, sondern an einer Umlenkrolle 23 angelenkt ist, wobei das Kabel 8 die Umlenkrolle 23 umlaufend gelagert ist. Der Vorteil dieser Ausführungsform liegt darin, dass die Umlenkrolle 23 immer im Scheitelpunkt der Kabelschlaufe bei verschiedenen Relativpositionen des Fixiergehäuses 10 zum Lagergehäuse 11 zwischen der Einfahrposition und der Ausfahrposition ist und somit beispielsweise das Verhältnis der Zugfederdehnung zu ausgeglichener Kabellänge kleiner und damit günstiger ist.

## Patentansprüche

1. Kabelübergang (9) zwischen zwei relativ zueinander beweglichen Elementen (A,B), insbesondere zwischen einem Türflügel (2) und einem Türrahmen (3), umfassend
- ein an dem ersten Element (A) befestigbares Fixiergehäuse (10),
- ein an dem zweiten Element (B) befestigbares Lagergehäuse (11) und
- ein zwischen dem Fixiergehäuse (10) und dem Lagergehäuse (11) bewegbar gelagertes Verbindungselement (12) mit einem Kabelkanal (13), der zur Führung wenigstens eines Kabels (8) zwischen dem Lagergehäuse (11) und dem Fixiergehäuse (10) ausgebildet ist,
wobei der Kabelübergang zur wenigstens teilweisen Montage auf einer Außenoberfläche wenigstens eines der beiden zueinander beweglichen Elemente (A, B) ausgebildet ist, **dadurch gekennzeichnet, daß** der Kabelübergang auf der Oberfläche eines Türblattes (2) aufmontierbar ist, und
das Verbindungselement (12) bei einer Lageänderung des ersten Elementes (A) zu dem zweiten Element (B) innerhalb eines Verstellbereiches zum Kabellängenausgleich zumindest teilweise zwischen dem Fixiergehäuse (10) und dem Lagergehäuse (11) zwischen einer Einfahrposition und einer Ausfahrposition verschiebbar ist.

2. Kabelübergang (9) gemäß dem vorhergehenden Anspruch,
**dadurch gekennzeichnet,**
**dass** das Verbindungselement (12) am Fixiergehäuse (10) feststehend gelagert ist.

3. Kabelübergang (9) gemäß einem der vorhergehenden Ansprüche,
**dadurch gekennzeichnet,**
**dass** das Verbindungselement (12) ein zumindest teilweise biegsames Schutzrohr (24) ist, das wenigstens gemäß einem der folgenden Merkmale ausgebildet ist:
- das Schutzrohr (24) besteht aus Kunststoff;
- des Schutzrohr (24) ist als Schraubenfeder ausgebildet;
- das Schutzrohr (24) umfasst ein gewendeltes Metallprofil;
- das Schutzrohr (24) ist ein Energieführungskette, insbesondere mit zumindest einseitiger Schutzabdeckung;
- das Schutzrohr (24) umfasst wenigstens einen Faltenbalg; und
- das Schutzrohr (24) umfasst wenigstens eine metallische Schutzabdeckung.

4. Kabelübergang (9) gemäß einem der vorhergehenden Ansprüche,
**dadurch gekennzeichnet,**
**dass** ein Aufnahmeraum im Lagergehäuse (11) vorhanden ist, der zur Aufnahme des jeweils in das Lagergehäuse (11) hineinragenden Teils (12a) des Verbindungselementes (12) ausgebildet ist.

5. Kabelübergang (9) gemäß einem der vorhergehenden Ansprüche,
**dadurch gekennzeichnet,**
**dass** ein Sabotageschutz vorhanden ist, der den Zugriff auf das in Einfahrposition befindliche Verbindungselement (12) verhindert.

6. Kabelübergang (9) gemäß Anspruch 5,
**dadurch gekennzeichnet,**
**dass** das Fixiergehäuse (10) und das Lagergehäuse (11) zum Sabotageschutz zueinander formschlüssig ausgebildet sind.

7. Kabelübergang (9) gemäß einem der Ansprüche 5 oder 6,
**dadurch gekennzeichnet,**
**dass** der Sabotageschutz eine Schutzeinrichtung zur zumindest teilweisen Abdeckung des Abstandsbereiches (14) zwischen dem Lagergehäuse (10) und dem Fixiergehäuse (11) ist, wenn das Verbindungselement (12) in der Einfahrposition ist.

8. Kabelübergang (9) gemäß einem der Ansprüche 5 bis 7,
**dadurch gekennzeichnet,**
**dass** die Schutzeinrichtung Formschlusselemente und insbesondere wenigstens eine vom Fixiergehäuse (10) oder vom Lagergehäuse (11) abstehende Schutzhülse (16) zwischen dem Fixiergehäuse (10) und dem Lagergehäuse (11) aufweist.

9. Kabelübergang (9) gemäß einem der vorhergehenden Ansprüche,
**dadurch gekennzeichnet,**
**dass** das Verbindungselement (12) im Lagergehäuse (11) zugfederbeaufschlagt ist.

10. Kabelübergang (9) gemäß einem der vorhergehenden Ansprüche,
**dadurch gekennzeichnet,**
**dass** der Kabelübergang (9) wenigstens eine Kabelzugsperre (19) im Lagergehäuses (11) und/oder wenigstens eine Kabelzugsperre (18) im Fixiergehäuses (10) umfasst.

11. Kabelübergang (9) gemäß einem der vorhergehenden Ansprüche,
**dadurch gekennzeichnet,**
**dass** er eine Zugfederbeaufschlagung mit einer zugfederbeaufschlagten Umlenkrolle (23) umfasst.

12. Kabelübergang (9) gemäß einem der vorhergehenden Ansprüche,
**dadurch gekennzeichnet,**
**dass** am Verbindungselement (12) eine Verstellwegbegrenzung in Ausfahrrichtung vorhanden ist, insbesondere in Form eines am Verbindungselement (12) innerhalb des Lagergehäuses (11) angeordneten Anschlagelements (17), das beim Erreichen der maximalen Ausfahrposition an ein Innenteil des Lagergehäuses (11) anschlägt.

13. Kabelübergang (9) gemäß einem der vorhergehenden Ansprüche,
**dadurch gekennzeichnet,**
**dass** das Fixiergehäuse (10) oder das Lagergehäuse (11) Teil eines Panikbalkens (5) oder einer Panikstange ist.

14. Panikbalken (5) oder Panikstange, insbesondere gemäß DIN EN 1125, umfassend ein horizontal über ein Türblatt (2) verlaufendes Betätigungselement (6) und stirnseitig jeweils ein Gehäuseelement (7),
**dadurch gekennzeichnet,**
**dass** er einen Kabelübergang (9) gemäß einem der Ansprüche 1 bis 13 umfasst, und dass insbesondere das zur Lagerseite (LS) des Türblatts (2) am Türrahmen (3) hin angeordnete Gehäuse (7) Teil des Lagergehäuses (11) oder des Fixiergehäuses (12) des Kabelübergangs (9) ist.

15. Durchgangstüranordnung (1a) mit einem Wandbereich (3), einem in dem Wandbereich (3) zwischen einer Schließstellung in einer Offenstellung bewegbarem Türblatt (2) mit einer Außenoberfläche (2a) auf der Bandseite und einer dazu gegenüberliegenden Außenoberfläche auf der Bandgegenseite in Durchgangsrichtung (a) aufweist,
**dadurch gekennzeichnet,**
**dass** ein Kabelübergang (9), eine Panikstange oder ein Panikbalken (5) gemäß einem der vorhergehenden Ansprüche vorhanden ist, der wenigstens teilweise auf der Außenoberfläche (2a, 3a) der Bandseite oder der Bandgegenseite des Türblatts und/oder des an das Türblatt angrenzenden Wandabschnitts aufmontiert ist.

## Claims

1. A cable transition (9) between two elements (A, B) movable in relation to one another, in particular between a door leaf (2) and a door frame (3), comprising
- a fixation housing (10) fastenable on the first element (A),
- a bearing housing (11) fastenable on the second element (B), and
- a connecting element (12), which is mounted so it is movable between the fixation housing (10) and the bearing housing (11), having a cable channel (13), which is implemented to guide at least one cable (8) between the bearing housing (11) and the fixation housing (10),
wherein the cable transition is implemented for at least partial mounting on an external surface of at least one of the two elements (A, B) movable in relation to one another, **characterized in that** the cable transition can be mounted on the surface of a door leaf (2), and
the connecting element (12), in the event of a location change of the first element (A) in relation to the second element (B) within an adjustment range for cable length equalization, is displaceable at least partially between the fixation housing (10) and the bearing housing (11) between a retracted position and an extended position.

2. The cable transition (9) according to the preceding claim,
**characterized in that** the connecting element (12) is mounted so it is stationary on the fixation housing (10).

3. The cable transition (9) according to one of the preceding claims,
**characterized in that** the connecting element (12) is an at least partially flexible protective tube (24), which is implemented according to at least one of the following features:
- the protective tube (24) consists of plastic;
- the protective tube (24) is implemented as a coiled spring;
- the protective tube (24) comprises a coiled metal profile;
- the protective tube (24) is a cable carrier chain, in particular having a protective cover on at least one side;
- the protective tube (24) comprises at least one folded bellows; and
- the protective tube (24) comprises at least one metallic protective cover.

4. The cable transition (9) according to one of the preceding claims,
**characterized in that** a receptacle space is provided in the bearing housing (11), which is implemented to receive the respective part (12a) of the connecting element (12) protruding into the bearing housing (11).

5. The cable transition (9) according to one of the preceding claims,
**characterized in that** a sabotage protection is provided, which prevents the access to the connecting element (12) located in the retracted position.

6. The cable transition (9) according to Claim 5,
**characterized in that** the fixation housing (10) and the bearing housing (11) are implemented as formfitting with one another for sabotage protection.

7. The cable transition (9) according to one of Claims 5 or 6,
**characterized in that** the sabotage protection is a protective unit for at least partially covering the spacing region (14) between the bearing housing (10) and the fixation housing (11) when the connecting element (12) is in the retracted position.

8. The cable transition (9) according to one of Claims 5 to 7,
**characterized in that** the protective unit has formfitting elements and in particular at least one protective sleeve (16), which protrudes from the fixation housing (10) or from the bearing housing (11), between the fixation housing (10) and the bearing housing (11).

9. The cable transition (9) according to one of the preceding claims,
**characterized in that** the connecting element (12) is traction-spring-loaded in the bearing housing (11).

10. The cable transition (9) according to one of the preceding claims,
**characterized in that** the cable transition (9) comprises at least one cable pull lock (19) in the bearing housing (11) and/or at least one cable pull lock (18) in the fixation housing (10).

11. The cable transition (9) according to one of the preceding claims,
**characterized in that** it comprises a traction spring application using a traction-spring-loaded deflection roll (23).

12. The cable transition (9) according to one of the preceding claims,
**characterized in that** an adjustment travel limiter in the extension direction is provided on the connecting element (12), in particular in the form of a stop element (17), which is arranged on the connecting element (12) inside the bearing housing (11), and which stops on an inner part of the bearing housing (11) upon reaching the maximum extended position.

13. The cable transition (9) according to one of the preceding claims,
**characterized in that** the fixation housing (10) or the bearing housing (11) is part of a panic bar (5) or a panic rod.

14. A panic bar (5) or panic rod, in particular according to DIN EN 1125, comprising a horizontal actuating element (6) extending over a door leaf (2) and a housing element (7) on each of the end sides,
**characterized in that** it comprises a cable transition (9) according to one of Claims 1 to 13, and in particular the housing (7) arranged toward the bearing side (LS) of the door leaf (2) on the door frame (3) is part of the bearing housing (11) or the fixation housing (12) of the cable transition (9).

15. An access door arrangement (1 a) having a wall region (3), a door leaf (2), which is movable in the wall region (3) between a closed position and an open position, having an external surface (2a) on the hinge side and an external surface opposite thereto on the opposite hinge side in the access direction (a),
**characterized in that** a cable transition (9), a panic rod, or a panic bar (5) according to one of the preceding claims is provided, which is mounted at least partially on the external surface (2a, 3a) of the hinge side or the opposite hinge side of the door leaf and/or of the wall section adjoining the door leaf.

## Revendications

1. Passage de câbles (9) entre deux éléments (A, B) mobiles l'un par rapport à l'autre, en particulier entre un battant de porte (2) et un cadre de porte (3), comprenant
- un boîtier de fixation (10) pouvant être fixé au premier élément (A),
- un boîtier de palier (11) pouvant être fixé au deuxième élément (B) et
- un élément de liaison (12) supporté de façon mobile entre le boîtier de fixation (10) et le boîtier de palier (11) avec une goulotte de câbles (13) qui est conçue pour guider au moins un câble (8) entre le boîtier de palier (11) et le boîtier de fixation (10),
lequel passage de câbles est conçu pour un montage au moins partiel sur une surface extérieure d'au moins un des deux éléments (A, B) mobiles l'un par rapport à l'autre, **caractérisé en ce que** le passage de câbles peut être monté sur la surface d'un vantail de porte (2) et
l'élément de liaison (12) peut, lors d'un changement de position du premier élément (A) par rapport au deuxième élément (B) dans une plage de déplacement, se déplacer au moins partiellement entre une position rentrée et une position déployée entre le boîtier de fixation (10) et le boîtier de palier (11), pour compenser la longueur des câbles.

2. Passage de câbles (9) selon la revendication précédente, **caractérisé en ce que** l'élément de liaison (12) est supporté de manière fixe sur le boîtier de fixation (10).

3. Passage de câbles (9) selon l'une des revendications précédentes, **caractérisé en ce que** l'élément de liaison (12) est un tube de protection (24) au moins partiellement flexible, qui est conçu selon au moins une des caractéristiques suivantes :
- le tube de protection (24) est fait de matière plastique ;
- le tube de protection (24) est conformé comme un ressort hélicoïdal ;
- le tube de protection (24) comprend un profilé métallique en spirale ;
- le tube de protection (24) est une chaîne de transport d'énergie, en particulier avec un capotage de protection sur au moins un côté ;
- le tube de protection (24) comprend au moins un soufflet ; et
- le tube de protection (24) comprend au moins un capotage de protection métallique.

4. Passage de câbles (9) selon l'une des revendications précédentes, **caractérisé en ce qu'**il est prévu un réceptacle dans le boîtier de palier (11) qui est conçu pour recevoir la partie (12a) de l'élément de liaison (12) qui dépasse dans le boîtier de palier (11).

5. Passage de câbles (9) selon l'une des revendications précédentes, **caractérisé en ce qu'**il est prévu une protection anti-sabotage qui empêche l'accès à l'élément de liaison (12) quand il est dans la position rentrée.

6. Passage de câbles (9) selon la revendication 5, **caractérisé en ce que** le boîtier de fixation (10) et le boîtier de palier (11) sont conformés en correspondance de forme l'un par rapport à l'autre afin de les protéger contre le sabotage.

7. Passage de câbles (9) selon l'une des revendications 5 ou 6, **caractérisé en ce que** la protection anti-sabotage est un dispositif de protection destiné à couvrir au moins partiellement l'espace (14) entre le boîtier de palier (10) et le boîtier de fixation (11) quand l'élément de liaison (12) est dans la position rentrée.

8. Passage de câbles (9) selon l'une des revendications 5 à 7, **caractérisé en ce que** le dispositif de protection comprend des éléments en correspondance de forme et en particulier au moins une douille de protection (16) qui dépasse du boîtier de fixation (10) ou du boîtier de palier (11) entre le boîtier de fixation (10) et le boîtier de palier (11).

9. Passage de câbles (9) selon l'une des revendications précédentes, **caractérisé en ce que** l'élément de liaison (12) est soumis à l'action d'un ressort dans le boîtier de palier (11).

10. Passage de Câbles (9) selon l'une des revendications précédentes, **caractérisé en ce que** le passage de câbles (9) comprend au moins un blocage de câble en traction (19) dans le boîtier de palier (11) et/ou au moins un blocage de câble en traction (18) dans le boîtier de fixation (10).

11. Passage de câbles (9) selon l'une des revendications précédentes, **caractérisé en ce qu'**il comprend un dispositif d'action d'un ressort de traction avec un galet de renvoi (23) soumis à l'action d'un ressort de traction.

12. Passage de câbles (9) selon l'une des revendications précédentes, **caractérisé en ce qu'**il est prévu sur l'élément de liaison (12) une limitation du déplacement dans le sens du déploiement, prenant en particulier la forme d'un élément de butée (17) disposé sur l'élément de liaison (12) à l'intérieur du boîtier de palier (11), qui bute sur une partie intérieure du boîtier de palier (11) quand la position de déploiement maximale est atteinte.

13. Passage de câbles (9) selon l'une des revendications précédentes, **caractérisé en ce que** le boîtier de fixation (10) ou le boîtier de palier (11) fait partie d'une barre anti-panique (5).

14. Barre anti-panique (5), en particulier selon DIN EN 1125, comprenant un élément d'actionnement (6) placé horizontalement sur un vantail de porte (2) et un élément de boîtier (7) sur chacune de ses faces d'extrémité, **caractérisée en ce qu'**elle comprend un passage de câbles (9) selon l'une des revendications 1 à 13, et en particulier **en ce que** le boîtier (7) disposé du côté du palier (LS) du vantail de porte (2) sur le cadre de porte (3) fait partie du boîtier de palier (11) ou du boîtier de fixation (12) du passage de câbles (9).

15. Disposition de porte de passage (1a) avec une zone de mur (3), un vantail de porte (2) pouvant être déplacé dans la zone de mur (3) entre une position fermée et une position ouverte, avec une surface extérieure (2a) du côté du bandeau et une surface extérieure opposée sur le côté opposé au seuil dans le sens de passage (a), **caractérisée en ce qu'**il est prévu un passage de câbles (9) ou une barre anti-panique (5) selon l'une des revendications précédentes, monté au moins en partie sur la surface extérieure (2a, 3a) du côté du seuil ou du côté opposé au seuil du vantail de porte et/ou sur la zone de mur limitrophe du vantail de porte.
